(19) Europäisches Patentamt
European Patent Office
Office européen des brevets

(11) EP 2 185 675 B1

(12) # EUROPÄISCHE PATENTSCHRIFT

(45) Veröffentlichungstag und Bekanntmachung des Hinweises auf die Patenterteilung:
**14.01.2015 Patentblatt 2015/03**

(21) Anmeldenummer: **08803307.1**

(22) Anmeldetag: **28.08.2008**

(51) Int Cl.:
***C11D 1/825*** (2006.01) ***C08G 65/332*** (2006.01)
***C08L 71/02*** (2006.01) ***C11D 1/722*** (2006.01)
***C11D 1/74*** (2006.01)

(86) Internationale Anmeldenummer:
**PCT/EP2008/061281**

(87) Internationale Veröffentlichungsnummer:
**WO 2009/027456 (05.03.2009 Gazette 2009/10)**

(54) **VERESTERTE ALKYLALKOXYLATE ALS FESTE SCHAUMARME NETZER**

ESTERIFIED ALKYL ALKOXYLATES AS SOLID LOW-FOAM WETTING AGENTS

ALCOXYLATES D'ALKYLE ESTÉRIFIÉS COMME MOUILLANTS SOLIDES PEU MOUSSANTS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.08.2007 EP 07115192**

(43) Veröffentlichungstag der Anmeldung:
**19.05.2010 Patentblatt 2010/20**

(73) Patentinhaber: **BASF SE**
**67056 Ludwigshafen (DE)**

(72) Erfinder:
- **BITTNER, Christian**
  **64625 Bensheim (DE)**
- **TROPSCH, Jürgen**
  **67354 Römerberg (DE)**
- **KAHL, Rolf-Dieter**
  **67454 Hassloch (DE)**
- **STÖSSER, Michael**
  **67141 Neuhofen (DE)**
- **KUMMETER, Markus**
  **68542 Heddesheim (DE)**

(56) Entgegenhaltungen:
**WO-A-94/03251 WO-A-2006/097435**
**DE-A1- 3 541 813**

- **SZYMANOWSKI J ET AL: "SYNTHESIS AND PROPERTIES OF ESTERIFICATION PRODUCTS OF SOME OXYETHYLATED ALCOHOLS AND ALKYLPHENOLS WITH FATTY ACIDS" FETTE, SEIFEN, ANSTRICHMITTEL, INDUSTRIEVERLAG VON HERNHAUSSEN KG. HAMBURG, DE, Bd. 82, Nr. 6, 1. Januar 1980 (1980-01-01), Seiten 244-249, XP009069819**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 185 675 B1

**Beschreibung**

Die vorliegende Erfindung betrifft Waschmittel- oder Reinigungsmittel-Formulierungen enthaltend schaumarme Tensid-Mischungen, sowie die Verwendung der Tensid-Mischungen.

Tenside sind Substanzen, die die Grenzflächenspannung herabsetzen können. Typischerweise verfügen Tenside über einen charakteristischen Aufbau und weisen mindestens eine hydrophile und mindestens eine hydrophobe funktionelle Gruppe auf. Wenn beide Teile des Moleküls im Gleichgewicht zueinander stehen, wird sich die Substanz an einer Grenzfläche anreichern und ausrichten, d.h. hydrophile Gruppen weisen beispielsweise in eine wässrige Phase und die hydrophoben Gruppen in Richtung anderer fester, flüssiger oder gasförmiger Phasen. Eine weitere Besonderheit von Tensiden ist die Bildung höherer Aggregate, den sogenannten Micellen. Bei diesen ordnen sich die Tensidmoleküle dergestalt an, dass die polaren Gruppen zum Beispiel eine Kugelschale bilden. Dies bewirkt, dass Stoffe wie Schmutzpartikel in einer wässrigen Lösung unter Ausbildung von Micellen löslich gemacht werden.

Daher eignen sich Tenside insbesondere zur Reinigung von Oberflächen und als Zusatz in Waschmitteln.

Tenside, die einen hydrophoben und einen hydrophilen Bauteil aufweisen, sind weit verbreitet. Ihre Neigung zur Schaumbildung macht sie aber für viele Anwendungen nicht oder nur bedingt brauchbar. Daher wurden insbesondere nicht-ionische Tenside vorgeschlagen, die einen zweiten hydrophoben Block aufweisen, so dass das Schaumvolumen begrenzt wird.

DE-A 12 43 312 beschreibt beispielsweise die Verwendung von Alkylalkoxylaten, welche mit einer aliphatischen kurzkettigen oder aromatischen Carbonsäure verestert sind, als schaumarme nicht-ionische Tenside.

Ähnliche Verbindungen werden in DE-A 25 44 707 offenbart. Auch hier wird die Säurekomponente durch eine kurzkettige aliphatische Säure, nämlich Essigsäure, gebildet.

EP-A 035 702 offenbart Schaumdämpfungsmittel, die nicht-ionische Tenside beinhalten. Diese Tenside sollen 3 bis 10 Ethylenoxideinheiten beinhalten.

WO-A 94/03251 offenbart endgruppenverschlossene Antischaummittel, bei denen als Alkoholkomponente ein Fettalkoholpolyglykolether eingesetzt wird, der ebenfalls vorzugsweise bis 10 Ethylen- oder Propylenoxideinheiten enthält.

Darüber hinaus werden in WO-A 2006/097435 schaumarme Tensid-Mischungen beschrieben, die gute Eigenschaften in Hinblick auf die Schaumdämpfung aufweisen. Diese besitzen bis zu 35 Ethylenglykoleinheiten und liegen in Form eines Esters vor. Nachteilig an diesen Tensid-Mischungen ist jedoch, dass sie einen Schmelzpunkt im Bereich von etwa 30-33°C aufweisen, so dass diese wenig geeignet für feste Wasch-und Reinigungsmittelformulierungen sind.

Es besteht daher ein Bedarf an alternativen Waschmittel- oder Reinigungsmittel-Formulierungen enthaltend schaumarme Tensid-Mischungen.

Eine Aufgabe der vorliegenden Erfindung liegt somit darin, solche Formulierungen zur Verfügung zu stellen.

Die Aufgabe wird gelöst durch eine Waschmittel - oder Reinigungsmittel-Formulierung, welche bei Raumtemperatur in fester Form vorliegt, enthaltend eine schaumarme Tensid-Mischung
enthaltend Ester der allgemeinen Formel (I)

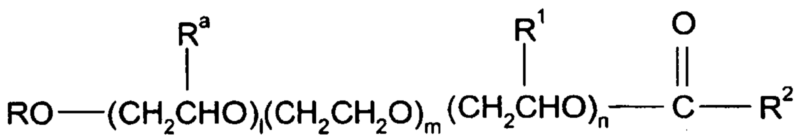

(I)

und deren Alkohole der allgemeinen Formel (Ia)

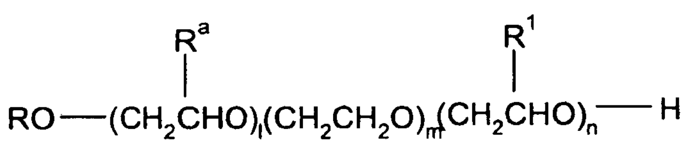

(Ia)

,

wobei

R ein verzweigter oder unverzweigter Alkylrest mit 8 bis 22 Kohlenstoffatomen ist;

$R^a$, $R^1$ unabhängig voneinander Wasserstoff oder ein verzweigter oder unverzweigter Alkylrest mit 1 bis 5 Kohlenstoffatomen sind;

$R^2$ ein verzweigter oder unverzweigter Alkylrest mit 5 bis 17 Kohlenstoffatomen ist;

l, n unabhängig voneinander eine Zahl von 1 bis 5 sind und

m eine Zahl von 38 bis 70 ist und

wobei das Verhältnis der molaren Mengen der Ester (I) zu den Alkoholen (Ia) mindestens 17:3 beträgt und l+n+m eine Zahl von 46 bis 75 ist; sowie Builder.

Es wurde nämlich gefunden, dass die erfindungsgemäßen Formulierungen enthaltend Tensid-Mischungen aufgrund ihrer höheren Zahl an Ethylenglykoleinheiten im Vergleich zu den Mischungen aus WO-A 2006/097435 einen höheren Schmelzpunkt aufweisen, wobei jedoch überraschenderweise nur dann vergleichbare Schaumdämpfungswirkungen erzielt werden können, wenn das Verhältnis der molaren Menge der Ester(I) zu den Alkoholen (Ia) mindestens 17:3 beträgt, was einem Veresterungsgrad von mindestens 85% entspricht.

Hierbei weisen die Tensid-Mischungen zwar sehr hohe HLB-Werte auf, wobei jedoch eine vergleichsweise hervorragende Schaumdämpfung vorzugsweise in einem Temperaturbereich von 0-120°C vorliegt.

Der HLB-Wert ergibt sich dabei als Quotient aus Menge an Ethylenoxid zu Gesamtmenge x 20. Allgemein ist der HLB-Wert definiert durch die Formel

$$\text{HLB} = 20\left(1-\frac{M_L}{M_G}\right),$$

wobei $M_L$ das Molekulargewicht der lipophilen Anteile und $M_G$ das Gesamtgewicht angibt. Nähere Einzelheiten hierzu finden sich in H.-D. Dörfer, Grenzflächen und kolloiddisperse Systeme, Springer Verlag 2002, Kapitel 9.3 "Physikalische Eigenschaften und Wirkungen der Tenside".

Die schaumarmen Tensid-Mischungen weisen typischerweise einen HLB-Wert von mehr als 17,7 und vorzugsweise weniger als 18,5 auf.

Tensid-Mischungen in Formulierungen gemäß der vorliegenden Erfindung können Ester der allgemeinen Formel (II) enthalten:

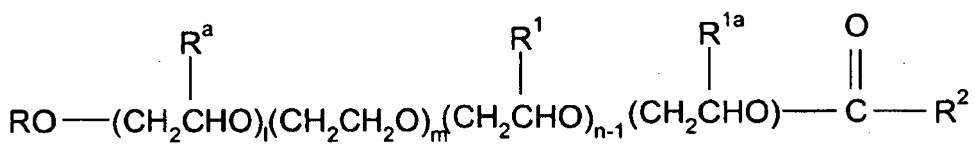

(II)

sowie deren Alkohole der allgemeinen Formel (IIa)

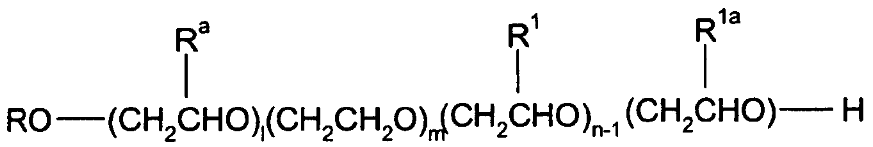

(IIa),

wobei $R^{1a}$ ein verzweigter oder unverzweigter Alkylrest mit 1 bis 5 Kohlenstoffatomen ist und R, $R^a$, $R^1$, $R^2$, l, m und n die obige Bedeutung haben.

Der Ausdruck "Alkylrest" bedeutet im Rahmen der vorliegenden Erfindung einen gesättigten verzweigten oder unverzweigten aliphatischen Kohlenwasserstoffrest mit der jeweils angegebenen Zahl an Kohlenstoffatomen.

Das Verhältnis der molaren Mengen der Ester (I) zu den Alkoholen (Ia) bzw. (II):(IIa) beträgt mindestens 17:3, was einem Veresterungsgrad von mindestens 85% entspricht.

Vorzugsweise beträgt das Verhältnis 7:1 (entsprechend einem Veresterungsgrad von 87,5%) weiter bevorzugt mindestens 9:1 (entsprechend 90%), weiter bevorzugt mindestens 37:3 (mindestens 92,5%), weiter bevorzugt mindestens 19:1 (mindestens 95%) und weiter bevorzugt mindestens 39:1 (mindestens 97,5%).

Das Verhältnis kann über $^1$H-NMR und/oder über die Menge des abgetrennten Wassers bei der Veresterung bestimmt werden. Dem Fachmann sind weitere Methoden bekannt.

Die schaumarme Tensid-Mischung in Formulierungen der vorliegenden Erfindung weist nicht ausschließlich Ester der allgemeinen Formel (I) bzw. (II) auf, was einem Veresterungsgrad von 100% (vollständige Veresterung) entspricht.

Typischerweise beträgt das Verhältnis der molaren Menge der Ester (I) zu den Alkoholen (Ia) bzw. (II):(IIa) höchstens 999:1 (ein Veresterungsgrad von höchstens 99,9%), mehr bevorzugt höchstens 199:1 (höchstens 99,5%) und weiter mehr bevorzugt höchstens 99:1 (höchstens 99%).

Vorzugsweise ist der Rest R ein verzweigter oder unverzweigter Alkylrest mit 12 bis 22 Kohlenstoffatomen. Sofern der Alkylrest verzweigt ist beträgt der Verzweigungsgrad bevorzugt 1-3. Unter dem Begriff "Verzweigungsgrad" ist im Rahmen der vorliegenden Erfindung die um 1 verminderte Anzahl an Methylgruppen zu verstehen.

Weiterhin bevorzugt sind $R^a$, $R^1$ unabhängig voneinander Wasserstoff, Methyl oder Ethyl. Treten $R^a$, $R^1$ häufiger auf, so kann jedes unabhängig von einem weiteren $R^a$ oder $R^1$ ausgewählt werden. So können $R^a$, $R^1$ blockweise oder statistisch verteilt auftreten.

Vorzugsweise sind $R^a$, $R^1$ blockweise verteilt, insbesondere jeweils am Ende der Ethylenglykolkette.

$R^{1a}$ ist vorzugsweise Methyl oder Ethyl.

$R^2$ ist bevorzugt ein verzweigter oder unverzweigter Alkylrest mit 5 bis 13 Kohlenstoffatomen.

Vorzugsweise ist n = 1, I = 5 und m bevorzugt eine Zahl von 39 bis 54, mehr bevorzugt von 39 bis 49.

In einer weiteren Ausführungsform sind $R^a$, $R^1$ = H, so dass die Tensid-Mischung ausschließlich unsubstituierte Ethylenglykoleinheiten aufweist.

Weiterhin ist bevorzugt, dass die Summe I + n + m eine Zahl von 50 bis 70 ist.

Weiterhin bevorzugt liegt das mittlere Molekulargewicht (gewichtsgemittelt) in einem Bereich von 1800 g/mol bis 4000 g/mol. Besonders bevorzugt liegt das mittlere Molekulargewicht in einem Bereich von 2000 g/mol bis 3500 g/mol.

Vorzugsweise sind mehr als 50% der Verbindungen der Tensid-Mischung Verbindungen der Formel (I) und (Ia) bzw. der Formel (II) und (IIa). Mehr bevorzugt beträgt der Anteil dieser Verbindung in der erfindungsgemäßen Tensid-Mischung mehr als 60%, weiter bevorzugt mehr als 70%, weiter mehr bevorzugt mehr als 75%, weiter bevorzugt mehr als 80%, weiter mehr bevorzugt mehr als 85% und insbesondere mehr als 90%.

Vorzugsweise weist die Tensid-Mischung einen Beginn des Schmelzbereiches auf, der über 35°C, mehr bevorzugt über 40°C und insbesondere über 45°C liegt.

Die Herstellung von Tensid- Mischungen kann die Schritte enthaltend:

a) Umsetzung eines Alkohols der Formel ROH mit einem Epoxid der Formel

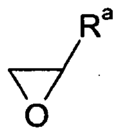

und anschließend mit Ethylenoxid;

b) Umsetzung des Produktes aus Schritt a) mit einem Epoxid der Formel

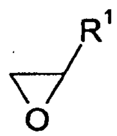

und optional mit einem Epoxid der Formel

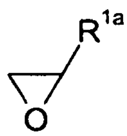

c) Umsetzung des gebildeten Produkts aus Schritt b) mit einer Carbonsäure $R^2$-COOH oder eines Methylesters $R^2$-$COOCH_3$, wobei $R^1$, $R^{1a}$ und $R^2$ die Bedeutung wie in Anspruch 1 oder 2 aufweisen.

Sofern in Schritt a) $R^a$ = H ist, erfolgt die Umsetzung nur mit Ethylenoxid.

Vorzugsweise erfolgen die Schritte a) und b) durch wasserfreie basenkatalysierte Umsetzung. Hierbei wird als

Base vorzugsweise Natriumhydroxid oder Kaliumhydroxid eingesetzt. Der Temperaturbereich beträgt vorzugsweise 50 bis 200 °C.

Die Umsetzung in Schritt c) erfolgt vorzugsweise säure- oder basekatalysiert; als Säure wird vorzugsweise Schwefelsäure oder Paratoluolsulfonsäure eingesetzt. Der Temperaturbereich kann bei Schritt c) von 80 bis 200 °C betragen. Vorzugsweise findet die Umsetzung in Schritt c) unter kontinuierlicher Entfernung des Reaktionswassers bzw. Methanols statt. Dies erfolgt beispielsweise bei Normaldruck und/oder durch Strippen mit Stickstoff oder unter reduziertem Druck oder durch Verwendung eines Schleppmittels wie zum Beispiel Toluol oder Xylol im Falle des Wassers.

Die vorliegende Erfindung betrifft auch die Verwendung der hierin beschriebenen Tensid-Mischung in Wasch- und Reinigungsformulierungen, welche bei Raumtemperatur in fester Form vorliegen.

Besonders bevorzugt finden die Tensid-Mischungen in so genannten "2 in 1" oder "3 in 1" Tabs Verwendung. Näheres zu diesen Formulierungen findet sich in Hermann G. Hauthal, G. Wagner (Hrsg), Reinigungs- und Pflegemittel im Haushalt, Verlag für chemische Industrie, H. Ziolkowsky GmbH, Augsburg 2003, Kapitel 4.2, Seiten 161-184.

Waschmittel im Sinne dieser Erfindung dienen in der Regel zum Waschen von mehr oder weniger flexiblen Materialien, vorzugsweise solchen, die natürliche, synthetische oder halbsynthetische Fasermaterialien enthalten oder daraus bestehen und die demzufolge in der Regel zumindest teilweise einen textilen Charakter aufweisen. Die faserhaltigen oder aus Fasern bestehenden Materialien können prinzipiell in jeder im Gebrauch oder der Herstellung und Verarbeitung vorkommenden Form vorliegen. Beispielsweise können Fasern ungeordnet in Form von Flocke oder Laufwerk, geordnet in Form von Fäden, Garnen, Zwirnen, oder in Form von Flächengebilden wie Vliesen, Lodenstoffen oder Filz, Geweben, Gewirken in allen denkbaren Bindungsarten vorliegen.

Es kann sich um Rohfasern oder um Fasern in beliebigen Verarbeitungsstadien handeln und es können natürliche Eiweiß- oder Zellulosefasern wie Wolle, Seide, Baumwolle, Sisal, Hanf, Kokosfasern oder Synthesefasern wie beispielsweise Polyester-, Polyamid- oder Polyacrylnitrilfasern sein.

Die erfindungsgemäßen Waschmittel können auch mit besonderem Vorteil im Rahmen der Verarbeitung von Fasermaterialien eingesetzt werden z.B. zum Entfetten von Rohwolle oder zum Entschlichten von Fasermaterialien aller Art.

Das erfindungsgemäße Reinigungsmittel eignet sich besonders gut zur Reinigung von Materialien mit geschlossener, insbesondere harter Oberfläche, d.h. von Oberflächen, die keine oder nur wenige und kleine Poren haben und infolgedessen keine oder nur eine geringe Saugfähigkeit aufweisen. Materialien mit geschlossenen Oberflächen sind überwiegend hart, können aber auch weich sein in dem Sinne, dass sie eine gewisse reversible oder irreversible Verformbarkeit aufweisen.

Beispiele für Materialien mit harten Oberflächen, für deren Reinigung die erfindungsgemäßen Reinigungsmittel vorzugsweise eingesetzt werden, sind Metall, Glas, Email, Keramik. Typische Objekte aus diesen Materialien sind z.B. metallene Spülbecken, Bestecke, Glas- und Porzellangeschirr, Badewannen, Waschbecken, Kacheln, Fliesen und ausgehärtete Kunstharze, wie z.B. dekorative Melaminharzoberflächen auf Küchenmöbeln oder lackierte Metallflächen wie z.B. Kühlschränke und Autokarosserien. Die erfindungsgemäßen Reinigungsmittel sind auch sehr wertvolle Hilfsmittel bei der Herstellung von gedruckten Schaltungen, wobei es darum geht, Fettspuren und andere Verunreinigungen von kupfer- oder silberkaschierten Trägern vor dem Ätzen und/oder vor der Bestückung zu entfernen und/oder nach der Bestückung Lötfette oder andere Flussmittelreste gründlich zu beseitigen.

Auch bei der Herstellung von Mikrochips können die erfindungsgemäßen Reinigungsmittel wertvolle Dienste leisten. Materialien mit geschlossenen, insbesondere harten Oberflächen im Sinne dieser Erfindung können auch zerklüftete Oberflächen aufweisen, wie sie beispielsweise bei Metallkeramik-Werkstoffen zu finden sind.

Beispiele für weichere Materialien, die mit der erfindungsgemäßen Reinigungsmittel gereinigt werden können, sind beispielsweise versiegelte oder lackierte Hölzer, z.B. Parkett oder Wandverkleidungen, Fensterrahmen, Türen, Kunststoffbeläge wie Fußbodenbeläge aus PVC oder Hartgummi, oder Hart- oder Weichschaumstoffe mit weitgehend geschlossenen Oberflächen.

Insbesondere können die erfindungsgemäßen Reiniger beispielsweise als Handgeschirrreiniger, Maschinengeschirrreiniger, Metallentfetter, Glasreiniger, Fußbodenreiniger, Allzweckreiniger, Hochdruckreiniger, Neutralreiniger, alkalische Reiniger, saure Reiniger, Spritzentfetter, Molkereireiniger, Großküchenreiniger, Apparatereiniger in der Industrie, insbesondere der chemischen Industrie, als Reiniger bei der Autowäsche aber auch als Haushalts-Allzweckreiniger eingesetzt werden.

Selbstverständlich werden die Zusammensetzungen der Wasch- und Reinigungsmittel den verschiedenen Zwecken angepasst, wie es dem Fachmann aus dem Stand der Technik geläufig ist. Hierzu können den erfindungsgemäßen Wasch- und Reinigungsmitteln alle zweckentsprechenden, aus dem oben genannten Stand der Technik bekannten Hilfs- und Zusatzstoffe zugefügt werden.

In vielen Fällen ist es zweckmäßig, die eingesetzten Tensid-Mischungen der Formel (I) mit anderen nichtionischen Tensiden, wie z.B. Alkoholalkoxylaten, Alkylaminalkoxilaten, Alkylamidalkoxylaten, Alkylpolyglucosiden, oder mit ionischen, vorzugsweise anionischen, Tensiden, wie zum Beispiel längerkettigen oder langkettigen Alkoholsulfatl-ethersulfaten, Alkylbenzolsulfonaten, $\alpha$-Olefinsulfonaten, Sulfosuccinaten, oder mit amphoteren Tensiden, wie z.B. Alkylaminoxiden, oder Betainen zu kombinieren.

Im Folgenden werden Beispiele für zur Kombination geeignete Tenside unterschiedlicher Natur genannt:

Als nichtionische Tenside eignen sich beispielsweise alkoxylierte $C_8$- bis $C_{22}$-Alkohole wie Fettalkoholalkoxylate oder Oxoalkoholalkoxylate. Die Alkoxylierung kann mit Ethylenoxid, Propylenoxid und/oder Butylenoxid durchgeführt werden. Als Tenside einsetzbar sind hierbei sämtliche alkoxylierten Alkohole, die vorzugsweise mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 50, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatome. Je nach Art des Alkoxylierungskatalysators kann man Alkoxylate mit breiter oder enger Alkylenoxid-Homologen-Verteilung erhalten.

Eine weitere Klasse geeigneter nichtionischer Tenside sind Alkylphenolalkoxylate wie Alkylphenolethoxylate mit $C_6$ bis $C_{14}$-Alkylketten und 5 bis 30 Mol Alkylenoxideinheiten.

Eine andere Klasse nichtionischer Tenside sind Alkylpolyglucoside mit 6 bis 22, vorzugsweise 8 bis 18 Kohlenstoffatomen in der Alkylkette. Diese Verbindungen enthalten meist 1 bis 20, vorzugsweise 1,1 bis 5 Glucosideinheiten.

Eine andere Klasse nichtionischer Tenside sind N-Alkylglucamide der allgemeinen Strukturen

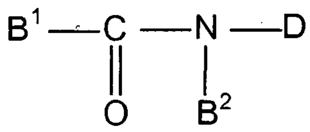

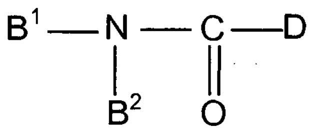

wobei $B^1$ ein $C_6$- bis $C_{22}$-Alkyl, $B^2$ Wasserstoff oder $C_l$-bis $C_4$-Alkyl und D ein Polyhydroxyalkyl-Rest mit 5 bis 12 C-Atomen und mindestens 3 Hydroxygruppen ist. Vorzugsweise steht $B^1$ für $C_{l0}$- bis $C_{18}$-Alkyl, $B^2$ für $CH_3$ und D für einen $C_5$- oder $C_6$-Rest. Beispielsweise erhält man derartige Verbindungen durch die Acylierung von reduzierend aminierten Zuckern mit Säurechloriden von $C_{l0}$- bis $C_{18}$-Carbonsäuren.

Weitere in Betracht kommende nichtionische Tenside sind die aus der WO-A 95/11225 bekannten endgruppenverschlossenen Fettsäureamidalkoxylate der allgemeinen Formel

$$R^1\text{-CO-NH-}(CH_2)_y\text{-O-}(A^1O)_xR^2$$

in der

- $R^1$ einen $C_5$- bis $C_{21}$-Alkyl- oder Alkenylrest bezeichnet,
- $R^2$ eine $C_1$- bis $C_4$-Alkylgruppe bedeutet,
- $A^1$ für $C_2$- bis $C_4$-Alkylen steht,
- y die Zahl 2 oder 3 bezeichnet und
- x einen Wert von 1 bis 6 hat.

Beispiele für solche Verbindungen sind die Umsetzungsprodukte von n-Butyltriglykolamin der Formel $H_2N\text{-}(CH_2\text{-}CH_2\text{-}O)_3\text{-}C_4H_9$ mit Dodecansäuremethylester oder die Reaktionsprodukte von Ethyltetraglykolamin der Formel $H_2N\text{-}(CH_2\text{-}CH_2\text{-}O)_4\text{-}C_2H_5$ mit einem handelsüblichen Gemisch von gesättigten $C_8$- bis $C_{18}$-Fettsäuremethylestern.

Weiterhin eignen sich als nichtionische Tenside noch Blockcopolymere aus Ethylenoxid, Propylenoxid und/oder Butylenoxid (Pluronic®- und Tetronic®-Marken der BASF), Polyhydroxy- oder Polyalkoxyfettsäurederivate wie Polyhydroxyfettsäureamide, N-Alkoxy- oder N-Aryloxypolyhydroxyfettsäureamide, Fettsäureamidethoxylate, insbesondere endgruppenverschlossene, sowie Fettsäurealkanolamidalkoxylate.

Die zusätzlichen nichtionischen Tenside("Niotenside") liegen in den erfindungsgemäßen Wasch- und Reinigungsmitteln vorzugsweise in einer Menge von 0,01 bis 30 Gew.-%, insbesondere 0,1 bis 25 Gew.-%, vor allem 0,5 bis 20 Gew.-%, vor.

Man kann einzelne nichtionische Tenside oder eine Kombination unterschiedlicher Niotenside einsetzen. Es können nichtionische Tenside aus nur einer Klasse zum Einsatz gelangen, insbesondere nur alkoxylierte $C_8$- bis $C_{22}$-Alkohole, man kann aber auch Tensid-Mischungen aus verschiedenen Klassen verwenden.

Geeignete anionische Tenside sind beispielsweise Fettalkoholsulfate von Fettalkoholen mit 8 bis 22, vorzugsweise 10 bis 18 Kohlenstoffatomen, z.B. $C_9$-$C_{11}$-Alkoholsulfate, $C_{12}$-$C_{14}$-Alkoholsulfate, $C_{12}$-$C_{18}$-Alkoholsulfate, Lauryl-

sulfat, Cetylsulfat, Myristylsulfat, Palmitylsulfat, Stearylsulfat und Talgfettalkoholsulfat.

Weitere geeignete anionische Tenside sind sulfatierte ethoxylierte $C_8$-$C_{22}$-Alkohole (Alkylethersulfate) bzw. deren lösliche Salze. Verbindungen dieser Art werden beispielsweise dadurch hergestellt, dass man zunächst einen $C_8$- bis $C_{22}$-, vorzugsweise einen $C_{l0}$-$C_{18}$-Alkohol z.B. einen Fettalkohol, alkoxyliert und das Alkoxylierungsprodukt anschließend sulfatiert. Für die Alkoxylierung verwendet man vorzugsweise Ethylenoxid, wobei man pro Mol Alkohol 1 bis 50, vorzugsweise 1 bis 20 Mol Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte $C_8$-$C_{22}$-Alkohole, die Ethylenoxid und Propylenoxid oder Ethylenoxid und Butylenoxid oder Ethylenoxid und Propylenoxid und Butylenoxid enthalten. Die alkoxylierten $C_8$-$C_{22}$-Alkohole können die Ethylenoxid-, Propylenoxid- und Butylenoxideinheiten in Form von Blöcken oder in statistischer Verteilung enthalten. Je nach Art des Alkoxylierungskatalysators kann man Alkylethersulfate mit breiter oder enger Alkylenoxid-Homologen-Verteilung erhalten.

Weitere geeignete anionische Tenside sind Alkansulfonate wie $C_8$-$C_{24}$-, vorzugsweise $C_{l0}$-$C_{18}$-Alkansulfonate sowie Seifen wie beispielsweise die Na- und K-Salze von $C_8$-$C_{24}$-Carbonsäuren.

Weitere geeignete anionische Tenside sind lineare $C_8$-$C_{20}$-Alkylbenzolsulfonate ("LAS"), vorzugsweise lineare $C_9$-$C_{13}$-Alkylbenzolsulfonate und -Alkyltoluol-sulfonate.

Weiterhin eignen sich als anionische Tenside noch $C_8$-$C_{24}$-Olefinsulfonate und -disulfonate, welche auch Gemische aus Alken- und Hydroxyalkansulfonaten bzw. -disulfonate darstellen können, Alkylestersulfonate, sulfonierte Polycarbonsäuren, Alkylglycerinsulfonate, Fettsäureglycerinestersulfonate, Alkylphenolpolyglykolethersulfate, Paraffinsulfonate mit ca. 20 bis ca. 50 C-Atomen (basierend auf aus natürlichen Quellen gewonnenem Paraffin oder Paraffingemischen), Alkylphosphate, Acylisethionate, Acyltaurate, Acylmethyltaurate, Alkylbernsteinsäuren, Alkenylbernsteinsäuren oder deren Halbester oder Halbamide, Alkylsulfobernsteinsäuren oder deren Amide, Mono- und Diester von Sulfobernsteinsäuren, Acylsarkosinate, sulfatierte Alkylpolyglucoside, Alkylpolyglykolcarboxylate sowie Hydroxyalkylsarkosinate.

Die anionischen Tenside werden dem Wasch- und Reinigungsmittel vorzugsweise in Form von Salzen zugegeben. Geeignete Kationen in diesen Salzen sind Alkalimetallionen wie Natrium, Kalium und Lithium und Ammoniumsalze wie z.B. Hydroxyethylammonium-, Di(hydroxyethyl)ammonium- und Tri(hydroxyethyl)ammoniumsalze. Die anionischen Tenside liegen in den erfindungsgemäßen Waschmitteln vorzugsweise in einer Menge von bis zu 30 Gew.-%, beispielsweise von 0,1 bis 30 Gew.-%, vor allem 1 bis 25 Gew.-%, insbesondere 3 bis 20 Gew.-% vor. Werden $C_9$-$C_{20}$-linear-Alkylbenzolsulfonate (LAS) mitverwendet, kommen diese üblicherweise in einer Menge bis zu 15 Gew.-%, insbesondere bis zu 10 Gew.-%, zum Einsatz.

In den erfindungsgemäßen Reinigungsmitteln liegen die anionischen Tenside in einer Menge von bis zu 30 Gew.-%, vor allem bis zu 25 Gew.-%, insbesondere bis zu 15 Gew.-% vor. Werden $C_9$-$C_{20}$-linear-Alkyl-benzolsulfonate (LAS) mitverwendet, kommen diese üblicherweise in einer Menge bis zu 10 Gew.-%, insbesondere bis zu 8 Gew.-%, zum Einsatz.

Man kann einzelne anionische Tenside oder eine Kombination unterschiedlicher Aniontenside einsetzen. Es können anionische Tenside aus nur einer Klasse zum Einsatz gelangen, beispielsweise nur Fettalkoholsulfate oder nur Alkylbenzolsulfonate, man kann aber auch Tensid-Mischungen aus verschiedenen Klassen verwenden, z.B. eine Mischung aus Fettalkoholsulfaten und Alkylbenzolsulfonaten.

Ferner können die einzusetzenden Tensid-Gemische der Formel (I) mit kationischen Tensiden, üblicherweise in einer Menge bis zu 25 Gew.-%, vorzugsweise 0,1 bis 15 Gew.-%, beispielsweise $C_8$-$C_{16}$-Dialkyldimethylammoniumhalogeniden, Dialkoxydimethylammoniumhalogeniden oder Imidazoliniumsalzen mit langkettigem Alkylrest; und/oder mit amphoteren Tensiden, üblicherweise in einer Menge bis zu 15 Gew.-%, vorzugsweise 0,1 bis 10 Gew.-%, beispielsweise Derivaten von sekundären oder tertiären Aminen wie z.B. $C_6$-$C_{18}$-Alkylbetainen oder $C_6$-$C_{l5}$-Alkylsulfobetainen oder Aminoxiden wie Alkyldimethylaminoxiden kombiniert werden.

Die in Formulierungen erfindungsgemäß einzusetzenden Tensid-Gemische der Formel (I) *werden* mit Buildern (Sequestrierungsmitteln) wie z.B. Polyphosphaten, Polycarboxilaten, Phosphonaten, Komplexbildnern, z.B. Methylglycindiessigsäure und deren Salze, Nitrilotriessigsäure und deren Salze, Ethylendiamintetraessigsäure und deren Salze sowie gegebenenfalls mit Co-Buildern kombiniert.

Einzelne zur Kombination mit den einzusetzenden TensidGemischen der Formel (I) gut geeignete Buildersubstanzen seien im Folgenden aufgezählt:

Geeignete anorganische Builder sind vor allem kristalline oder amorphe Alumosilikate mit ionenaustauschenden Eigenschaften wie insbesondere Zeolithe. Verschiedene Typen von Zeolithen sind geeignet, insbesondere Zeolithe A, X, B, P, MAP und HS in ihrer Na-Form oder in Formen, in denen Na teilweise gegen andere Kationen wie Li, K, Ca, Mg oder Ammonium ausgetauscht ist. Geeignete Zeolithe sind beispielsweise beschrieben in der US-A-4604224.

Als Builder geeignete kristalline Silicate sind beispielsweise Disilikate oder Schichtsilikate, z.B. $\delta$-$Na_2Si_2O_5$ oder $\beta$-$Na_2Si_2O_5$ (SKS 6 bzw. SKS 7). Die Silikate können in Form ihrer Alkalimetall-, Erdalkalimetall- oder Ammoniumsalze eingesetzt werden, vorzugsweise als Na-, Li- und Mg-Silikate. Amorphe Silikate wie beispielsweise Natriummetasilikat, welches eine polymere Struktur aufweist, oder amorphes Disilicat (Britesil® H 20 Hersteller: Akzo) sind ebenfalls verwendbar.

Geeignete anorganische Buildersubstanzen auf Carbonat-Basis sind Carbonate und Hydrogencarbonate. Diese können in Form ihrer Alkalimetall-, Erdalkalimetall- oder Ammoniumsalze eingesetzt werden. Vorzugsweise werden Na-, Li- und Mg-Carbonate bzw. -Hydrogencarbonate, insbesondere Natriumcarbonat und/oder Natriumhydrogencarbonat, eingesetzt. Übliche, als anorganische Builder eingesetzte Phosphate sind Alkali-orthophosphate,und/oder -Polyphosphate wie z.B. Pentanatriumtriphosphat. Die genannten Builder-Komponenten können einzeln oder in Mischungen untereinander eingesetzt werden.

Ferner ist es in vielen Fällen zweckmäßig den erfindungsgemäßen Wasch- und Reinigungsmitteln Co-Builder zuzufügen. Beispiele für geeignete Substanzen sind im Folgenden aufgelistet:

In einer bevorzugten Ausführungsform enthalten die erfindungsgemäßen Wasch- und Reinigungsmittel zusätzlich zu den anorganischen Buildern 0,05 bis 20 Gew.-%, insbesondere 1 bis 10 Gew.-% organische Cobuilder in Form von niedermolekularen, oligomeren oder polymeren Carbonsäuren, insbesondere Polycarbonsäuren, oder Phosphonsäuren oder deren Salzen, insbesondere Na- oder K-salzen.

Als organische Cobuilder geeignete niedermolekulare Carbonsäuren oder Phosphonsäuren sind beispielsweise:

Phosphonsäuren wie z.B. 1-Hydroxyethan-1,1-diphosphonsäure, Amino-tris(methylenphosphonsäure), Ethylendiamin-tetra(methylenphosphonsäure) , Hexamethylendiamintetra (methylenphosphonsäure) und Diethylentriaminpenta(methylenphosphonsäure); $C_4$-$C_{20}$-Di-, -Tri- und -Tetracarbonsäuren wie z.B. Bernsteinsäure, Propantricarbonsäure, Butantetracarbonsäure, Cyclopentantetra-carbonsäure und Alkyl- und Alkenylbernsteinsäuren mit $C_2$-$C_{16}$-Alkyl- bzw. -Alkenyl-Resten; $C_4$-$C_{20}$-Hydroxycarbonsäuren wie z.B. Äpfelsäure, Weinsäure, Gluconsäure, Glutarsäure, Citronensäure, Lactobionsäure und Saccharosemono-, -di- und -tricarbonsäure; Aminopolycarbonsäuren wie z.B. Nitrilotriessigsäure, $\beta$-Alanindiessigsäure, Ethylendiamintetraessigsäure, Serindiessigsäure, Isoserindiessigsäure, Alkylethylendiamintriacetate, N,N-bis(Carboxymethyl)glutaminsäure, Ethylendiamin-dibernsteinsäure und N-(2-Hydroxyethyl)iminodiessigsäure, Methyl- und Ethylglycindiessigsäure.

Als organische Cobuilder geeignete oligomere oder polymere Carbonsäuren sind beispielsweise:

Oligomaleinsäuren, wie sie beispielsweise in EP-A 451508 und EP-A 396303 beschrieben sind; Co- und Terpolymere ungesättigter $C_4$-$C_8$-Dicarbonsäuren, wobei als Comonomere monoethylenisch ungesättigte Monomere aus der unten angegebenen Gruppe (i) in Mengen von bis zu 95 Gew.-%, aus der Gruppe (ii) in Mengen von bis zu 60 Gew.-% und aus der Gruppe (iii) in Mengen von bis zu 20 Gew.-% einpolymerisiert sein können.

Als ungesättigte $C_4$- bis $C_8$-Dicarbonsäuren sind hierbei beispielsweise Maleinsäure, Fumarsäure, Itaconsäure und Citraconsäure geeignet. Bevorzugt wird Maleinsäure.

Die Gruppe (i) umfasst monoethylenisch ungesättigte $C_3$-$C_8$-Monocarbonsäuren wie z.B. Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfasst monoethylenisch ungesättigte $C_2$-$C_{22}$-Olefine, Vinylalkylether mit $C_1$-$C_8$-Alkylgruppen, Styrol, Vinylester von $C_1$-$C_8$-Carbonsäuren, (Meth)acrylamid und Vinylpyrrolidon. Bevorzugt werden aus der Gruppe (ii) $C_2$-$C_6$-Olefine, Vinylalkylether mit $C_l$-$C_4$-Alkylgruppen, Vinylacetat und Vinylpropionat eingesetzt.

Falls die Polymeren der Gruppe (ii) Vinylester einpolymerisiert enthalten, können diese auch teilweise oder vollständig zu Vinylalkohol-Struktureinheiten hydrolysiert vorliegen. Geeignete Co- und Terpolymere sind beispielsweise aus US-A 3887806 sowie DE-A 4313909 bekannt.

Die Gruppe (iii) umfasst (Meth)acrylester von $C_l$-$C_8$-Alkoholen, (Meth)acrylnitril, (Meth)acrylamide von $C_l$-$C_8$-Aminen, N-Vinylformamid und N-Vinylimidazol.

Als organische Cobuilder eignen sich auch Homopolymere der monoethylenisch ungesättigten $C_3$-$C_8$-Monocarbonsäuren wie z.B. Acrylsäure, Methacrylsäure, Crotonsäure und Vinylessigsäure, insbesondere der Acrylsäure und Methacrylsäure, Copolymere von Dicarbonsäuren, wie z.B. Copolymere von Maleinsäure und Acrylsäure im Gewichtsverhältnis 10:90 bis 95:5, besonders bevorzugt solche im Gewichtsverhältnis 30:70 bis 90:10 mit Molmassen von 1000 bis 150000;

Terpolymere aus Maleinsäure, Acrylsäure und einem Vinylester einer $C_l$-$C_3$-Carbonsäure im Gewichtsverhältnis 10 (Maleinsäure) :90 (Acrylsäure + Vinylester) bis 95 (Maleinsäure) :10 (Acrylsäure + Vinylester), wobei das Gew.-Verhältnis von Acrylsäure zum Vinylester im Bereich von 30:70 bis 70:30 variieren kann; Copolymere von Maleinsäure mit

$C_2$-$C_8$-Olefinen im Molverhältnis 40:60 bis 80:20, wobei Copolymere von Maleinsäure mit Ethylen, Propylen oder Isobuten im Molverhältnis 50:50 besonders bevorzugt sind.

Pfropfpolymere ungesättigter Carbonsäuren auf niedermolekulare Kohlenhydrate oder hydrierte Kohlenhydrate, vgl. US-A 5227446, DE-A 4415623 und DE-A 4313909, eignen sich ebenfalls als organische Cobuilder.

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie z.B. sauer oder enzymatisch abgebaute Stärken, Inuline oder Zellulose, Eiweißhydrolysate und reduzierte (hydrierte oder hydrierend aminierte) abgebaute Polysaccharide wie z.B. Mannit, Sorbit, Aminosorbit und N-Alkylglucamin geeignet sowie auch Polyalkylenglykole mit Molmassen mit bis zu $M_w$ = 5000 wie z. B. Polyethylenglykole, Ethylenoxid/Propylenoxid- bzw. Ethylenoxid/Butylenoxid bzw. Ethylenoxid/Propylenoxid/Butylenoxid-Blockcopolymere und alkoxylierte ein- oder mehrwertige $C_l$- bis $C_{22}$-Alkohole.(vgl. US-A-5756456)

Als organische Cobuilder geeignete Polyglyoxylsäuren sind beispielsweise beschrieben in EP-B-001004, US-A-5399286, DE-A-4106355 und EP-A-656914. Die Endgruppen der Polyglyoxylsäuren können unterschiedliche Strukturen aufweisen.

Als organische Cobuilder geeignete Polyamidocarbonsäuren und modifizierte Polyamidocarbonsäuren sind beispielsweise bekannt aus EP-A-454126, EP-B-511037, WO-A-94/01486 und EP-A-581452.

Als organische Cobuilder verwendet man insbesondere auch Polyasparaginsäuren oder Cokondensate der Asparaginsäure mit weiteren Aminosäuren, $C_4$-$C_{25}$-Mono- oder -Dicarbonsäuren und/oder $C_4$-$C_{25}$-Mono- oder -Diaminen. Besonders bevorzugt werden in phosphorhaltigen Säuren hergestellte, mit $C_6$-$C_{22}$-Mono- oder -Dicarbonsäuren bzw. mit $C_6$-$C_{22}$-Mono- oder -Diaminen modifizierte Polyasparaginsäuren eingesetzt.

Als organische Cobuilder eignen sich weiterhin Iminodibernsteinsäure, Oxydibernsteinsäure, Aminopolycarboxylate, Alkylpolyaminocarboxylate, Aminopolyalkylenphosphonate, Polyglutamate, hydrophob modifizierte Citronensäure wie z.B. Agaricinsäure, Poly-$\alpha$-hydroxyacrylsäure, N-Acylethylendiamintriacetate wie Lauroylethylendiamintriacetat und Alkylamide der Ethylendiamintetraessigsäure wie EDTA-Talgamid.

Weiterhin können auch oxidierte Stärken als organische Cobuilder verwendet werden.

In einer weiteren bevorzugten Ausführungsform enthalten die erfindungsgemäßen Wasch- und Reinigungsmittel zusätzlich, insbesondere zusätzlich zu den anorganischen Buildern, den anionischen Tensiden und/oder den nichtionischen Tensiden, 0,5 bis 20 Gew.-%, insbesondere 1 bis 10 Gew.-%, Glycin-N,N-diessigsäure-Derivate, wie sie in der WO 97/19159 beschrieben sind.

Häufig ist es auch zweckmäßig, den erfindungsgemäßen Wasch- und Reinigungsmitteln Bleichsysteme, bestehend aus Bleichmitteln, wie z.B. Perborat, Percarbonat und gegebenenfalls Bleichaktivatoren, wie z.B. Tetraacetylethylendiamin, + Bleichstabilisatoren zuzusetzen.

In diesen Fällen enthalten die erfindungsgemäßen Wasch- und Reinigungsmittel zusätzlich 0,5 bis 30 Gew.-%, insbesondere 5 bis 27 Gew.-%, vor allem 10 bis 23 Gew.-% Bleichmittel in Form von Percarbonsäuren, z.B. Diperoxododecandicarbonsäure, Phthalimidopercapronsäure oder Monoperoxophthalsäure oder -terephthalsäure, Addukten von Wasserstoffperoxid an anorganische Salze, z.B. NatriumperboratMonohydrat, Natriumperborat-Tetrahydrat, Natriumcarbonat-Perhydrat oder Natriumphosphat-Perhydrat, Addukten von Wasserstoffperoxid an organische Verbindungen, z.B. Harnstoff-Perhydrat, oder von anorganischen Peroxosalzen, z.B. Alkalimetallpersulfaten, oder -peroxodisulfaten, gegebenenfalls in Kombination mit 0 bis 15 Gew.-%, vorzugsweise 0,1 bis 15 Gew.-%, insbesondere 0,5 bis 8 Gew.-%, Bleichaktivatoren.

Als Bleichaktivatoren eignen sich:

- polyacylierte Zucker, z.B. Pentaacetylglucose;
- Acyloxybenzolsulfonsäuren und deren Alkali- und Erdalkaiimetallsalze, z.B. Natrium-p-nonanoyloxybenzolsulfonat oder Natrium-p-benzoyloxybenzolsulfonat;
- N,N-diacylierte und N,N,N',N'-tetraacylierte Amine, z.B. N,N,N',N'-Tetraacetylmethylendiamin und -ethylendiamin (TAED), N,N-Diacetylanilin, N,N-Diacetyl-p-toluidin oder 1,3-diacylierte Hydantoine wie 1,3-Diacetyl-5,5-dimethylhydantoin;
- N-Alkyl-N-sulfonylcarbonamide, z.B. N-Methyl-N-mesylacetamid oder N-Methyl-N-mesylbenzamid;
- N-acylierte cyclische Hydrazide, acylierte Triazole oder Urazole, z.B. Monoacetylmaleinsäurehydrazid;
- O,N,N-trisubstituierte Hydroxylamine, z.B. O-Benzoyl-N,N-succinylhydroxylamin, O-Acetyl-N,N-succinylhydroxylamin oder O,N,N-Triacetylhydroxylamin;
- N,N'-Diacylsulfurylamide, z.B. N,N'-Dimethyl-N,N'-diacetylsulfurylamid oder N,N'-Diethyl-N,N'-dipropionylsulfurylamid;

- acylierte Lactame wie beispielsweise Acetylcaprolactam, Octanoylcaprolactam, Benzoylcaprolactam oder Carbonylbiscaprolactam;
- Anthranilderivate wie z.B. 2-Methylanthranil oder 2-Phenylanthranil;
- Triacylcyanurate, z.B. Triacetylcyanurat oder Tribenzoylcyanurat;
- Oximester und Bisoximester wie z.B. O-Acetylacetonoxim oder Bisisopropyliminocarbonat;
- Carbonsäureanhydride, z.B. Essigsäureanhydrid, Benzoesäureanhydrid, m-Chlorbenzoesäureanhydrid oder Phthalsäureanhydrid;
- Enolester wie z.B. Isopropenylacetat;
- 1,3-Diacyl-4,5-diacyloxy-imidazoline, z.B. 1,3-Diacetyl-4,5-diacetoxyimidazolin;
- Tetraacetylglycoluril und Tetrapropionylglycoluril; diacylierte 2,5-Diketopiperazine, z.B. 1,4-Diacetyl-2,5-diketopiperazin;
- ammoniumsubstituierte Nitrile wie z.B. N-Methylmorpholiniumacetonitrilmethylsulfat;
- Acylierungsprodukte von Propylendiharnstoff und 2,2-Dimethyl-propylendiharnstoff, z.B. Tetraacetylpropylendiharnstoff;
- a-Acyloxypolyacylmalonamide, z.B. a-Acetoxy-N,N'-diacetylmalonamid;
- Diacyl-dioxohexahydro-1,3,5-triazine, z.B. 1,5-Diacetyl-2,4-dioxohexahydro-1,3,5-triazin;
- Benz-(4H)1,3-oxazin-4-one mit Alkylresten, z.B. Methyl, oder aromatischen Resten z.B. Phenyl, in der 2-Position.

Das beschriebene Bleichsystem aus Bleichmitteln und Bleichaktivatoren kann gegebenenfalls noch Bleichkatalysatoren enthalten. Geeignete Bleichkatalysatoren sind beispielsweise quaternierte Imine und Sulfonimine, die beispielsweise beschrieben sind in US-A 5 360 569 und EP-A 453 003. Besonders wirksame Bleichkatalysatoren sind Mangankomplexe, die beispielsweise in der WO-A 94/21777 beschrieben sind. Solche Verbindungen werden im Falle ihres Einsatzes in den Wasch- und Reinigungsmitteln höchstens in Mengen bis 1,5 Gew.-%, insbesondere bis 0,5 Gew.-%, im Falle von sehr aktiven Mangankomplexen in Mengen bis zu 0,1 Gew.-%, eingearbeitet.

Neben dem beschriebenen Bleichsystem aus Bleichmitteln, Bleichaktivatoren und gegebenenfalls Bleichkatalysatoren ist für die erfindungsgemäßen Wasch- und Reinigungsmittel auch die Verwendung von Systemen mit enzymatischer Peroxidfreisetzung oder von photoaktivierten Bleichsystemen möglich.

Für eine Reihe von Anwendungsfällen ist es zweckmäßig, wenn die erfindungsgemäßen Wasch- und Reinigungsmittel Enzyme enthalten. Vorzugsweise in Wasch- und Reinigungsmitteln eingesetzte Enzyme sind Proteasen, Amylasen, Lipasen und Cellulasen. Von den Enzymen werden vorzugsweise mengen von 0,1 bis 1,5 Gew.-%, insbesondere vorzugsweise 0,2 bis 1,0 Gew.-%, des konfektionierten Enzyms zugesetzt. Geeignete Proteasen sind z.B. Savinase und Esperase (Hersteller: Novo Nordisk). Eine geeignete Lipase ist z. B. Lipolase (Hersteller: Novo Nordisk). Eine geeignete Cellulase ist z.B. Celluzym (Hersteller: Novo Nordisk). Auch die Verwendung von Peroxidasen zur Aktivierung des Bleichsystems ist möglich. Man kann einzelne Enzyme oder eine Kombination unterschiedlicher Enzyme einsetzen. Gegebenenfalls kann das erfindungsgemäße Wasch- und Reinigungsmittel noch Enzymstabilisatoren, z.B. Calciumpropionat, Natriumformiat oder Borsäuren oder deren Salze, und/oder Oxidationsverhinderer enthalten.

Die Bestandteile von Wasch- und Reinigungsmitteln sind dem Fachmann prinzipiell bekannt. Die obigen und die weiter unten folgenden Listen geeigneter Bestandteile geben nur einen exemplarischen Ausschnitt der bekannten geeigneten Bestandteile wieder.

Die erfindungsgemäßen Wasch- und Reinigungsmittel können neben den bisher genannten Hauptkomponenten noch folgende weitere übliche Zusätze in den hierfür üblichen Mengen enthalten:

Bekannte Dispergiermittel, wie z.B. Naphthalinsulfonsäurekondensate oder Polycarboxilate, pH-regulierende Verbindungen wie z.B. Alkalien bzw. Alkalispender (NaOH, KOH, Pentanatriummetasilikat) oder Säuren (Salzsäure, Phosphorsäure, Amidoschwefelsäure, Citronensäure) Puffersysteme, wie z.B. Acetat oder Phosphatpuffer,
Parfüm, Farbstoffe, Biozide, wie z.B. Isothiazolinone oder 2-Bromo-2-nitro-1,3-propandiol,
Solubilisatoren/Hydrotrope, wie z.B. Cumolsulfonate, Toluolsulfonate, kurzkettige Fettsäuren, Harnstoff, Alkohole oder Phosphorsäurealkyl/-arylester, Alkyl/Arylpolyglycolphosphorsäureester, Schaumregulatoren zur Stabilisierung oder Dämpfung des Schaums, Haut- und Korrosionsschutzmittel, desinfizierende Verbindungen oder Systeme, wie z.B. solche die Chlor oder unterchlorige Säure freisetzen wie z.B. Dichlorisocyanurat oder die Jod enthalten.

Die Waschmittel enthalten gegebenenfalls zusätzlich Schmutztragemittel, Soil release Agentien, wie z.B. Polyetherester, Inkrustationsinhibitoren, Ionenaustauscher, Vergrauungsinhibitoren, optische (fluoreszierende) Aufheller, Farbübertragungsinhibitoren wie z.B. Polyvinylpyrrolidon, Verdickungsmittel und Stell- und Konfektionierungsmittel, in Reinigungsmitteln können zusätzlich Lösemittel, wie z.B. kurzkettige Alkyloligoglykole wie Butylglykol, Butyldiglykol, Propylenglykolmonomethylether, Alkohole wie Ethanol, i-Propanol, aromatische Lösemittel wie Toluol, Xylol, N-Alkylpyrrolidone oder Alkylencarbonate, Verdicker, wie z.B. Polysaccharide, und/oder schwach vernetzte Polycarboxylate

(beispielsweise Carbopol® der Firma Goodrich) feinteilige Abrasivkomponenten, wie z.B. Quarz- oder Marmormehl, Kreide, Diatomeenerde, Bimsstein oder auch Polierrot oder Schmirgel, enthalten sein.

Die Waschmittel liegen gewöhnlich, aber nicht ausschließlich, in fester, pulverförmiger Form vor, und enthalten dann in der Regel zusätzlich übliche Stellmittel, die ihnen eine gute Rieselfähigkeit, Dosierbarkeit und Löslichkeit verleihen und die das Zusammenbacken und Stauben verhüten, wie z.B. Natriumsulfat oder Magnesiumsulfat. Die pulverförmigen Waschmittel haben in der herkömmlichen Form ein durchschnittliches Schüttgewicht von ca. 450 g/l. Kompakt- oder Ultra-Kompaktwaschmittel sowie Extrudate weisen ein Schüttgewicht > 600 g/l auf. Diese gewinnen immer mehr an Bedeutung.

Bei tablettenförmigen Waschmitteln werden zusätzlich Tablettierhilfsmittel wie z.B. Polyethylenglykole mit Molmassen > 1000 g/mol, Polymerdispersionen, und Tablettensprengmittel wie z.B. Cellulosederivate, vernetztes Polyvinylpyrrolidon, vernetzte Polyacrylate oder Kombinationen aus Säuren, z.B. Citronensäure + Natriumbicarbonat, um nur einige zu nennen, benötigt.

In fester, pulverförmiger Form können Reinigungsmittel zusätzlich übliche Stellmittel, die ihnen eine gute Rieselfähigkeit, Dosierbarkeit und Löslichkeit verleihen und/oder die das Zusammenbacken und Stauben verhüten, wie z.B. Natriumsulfat oder Magnesiumsulfat eingesetzt werden.

Bei tablettenförmigen Reinigern werden zusätzlich Tablettierhilfsmittel wie z.B. Polyethylenglykole mit Molmassen > 1000 g/mol, Polymerdispersionen, und Tablettensprengmittel wie z.B. Cellulosederivate, vernetztes Polyvinylpyrrolidon, vernetzte Polyacrylate oder Kombinationen aus Säuren, z.B. Citronensäure + Natriumbicarbonat, um nur einige zu nennen, benötigt.

Die vorliegende Erfindung wird anhand der nachfolgenden Beispiele näher erläutert.

## Beispiele

### Beispiel 1

**Gemisch mit der Hauptkomponente**

**$C_{16}$-$C_{18}$-Fettalkohol - 50 EO + Dekansäure (Veresterungsgrad 95%)**

Das Ethoxylat aus 1 eq C16C18 - Fettalkohol und 50 eq Ethylenoxid wird als Lutensol AT 50 von der BASF über basische Katalyse mit KOH und anschließender Neutralisation hergestellt und verkauft.

Lutensol AT 50 (1693 g, 0.9 mol) wird mit Dekansäure (154.8 g, 0.9 mol), para-Toluolsulfonsäure (8.6 g, 0.045 mol) und Toluol (750 ml) versetzt und unter Rückfluss am Wasserabscheider solange erhitzt, bis kein Wasser mehr abgeschieden wird (24 h). Man erhält nach Neutralisation des sauren Katalysators mit KOH (45%ig) und nach Entfernung des Lösungsmittels im Vakuum 1780 g Feststoff (Schmp.: 49°C) mit einem Veresterungsgrad von 95% ($^1$H-NMR & abgeschiedene Wassermenge).

### Vergleichsbeispiel 2

**Gemisch mit der Hauptkomponente**

**$C_{16}$-$C_{18}$-Fettalkohol - 50 EO + Dekansäure (Veresterungsgrad 83%)**

Das Ethoxylat aus 1 eq C16C18 - Fettalkohol und 50 eq Ethylenoxid wird als Lutensol AT 50 von der BASF über basische Katalyse mit KOH und anschließender Neutralisation hergestellt und verkauft.

Lutensol AT 50 (245.8 g, 0.10 mol) wird mit Dekansäure (17.2 g, 0.10 mol), para-Toluolsulfonsäure (1.0 g, 0.005 mol) und Toluol (100 g) versetzt und bei 140°C am Wasserabscheider für 6 h erhitzt. Man erhält nach Entfernung des Lösungsmittels im Vakuum 258 g Feststoff (Schmp.: 46°C) mit einem Veresterungsgrad von 83% ($^1$H-NMR & abgeschiedene Wassermenge).

### Vergleichsbeispiel 3

**Gemisch mit der Hauptkomponente**

**Oktanol - 4.5 EO + Oktansäure**

a) Herstellung des Alkylalkoxylats:

Oktanol (263 g, 2 mol) wird mit gepulvertem KOH (1.7 g, 0.030 mol) in einem 21 Druckautoklaven der Firma Mettler versetzt und 1 h bei 95°C und 20 mbar entwässert. Anschließend wird zweimal mit Stickstoff inertisiert und auf 120°C erwärmt. Innerhalb von 5 h wird bis zu einem maximalen Druck von 6 bar Ethylenoxid (397 g, 9 mol) bei 120°C zudosiert und nach beendeter Zugabe noch 5 h nachgerührt. Man erhält Oktanol - 4.5 EO (660 g; OH-Zahl 178 mg KOH/g, Theorie 171 mg KOH/g).

b) Veresterung:

Oktanol - 4.5 EO (150 g, 0.46 mol) wird mit Oktansäure (67 g, 0.46 mol), para-Toluolsulfonsäure (5.8 g, 0.034 mol) und Toluol (200 ml) versetzt und bei 130°C am Wasserabscheider für 9 h gekocht. Man erhält nach Neutralisation mit NaOH und Entfernung des Lösungsmittels 210 g der gewünschten flüssigen Verbindung mit einem Veresterungsgrad von ca. 90% ($^1$H-NMR).

**Vergleichsbeispiel 4**

**Gemisch mit der Hauptkomponente**

**Oktanol - 20 EO -1 PO + Oktansäure**

a) Herstellung des Alkylalkoxylats

Oktanol (132 g, 1 mol) wird mit gepulvertem KOH (2.7 g, 0.048 mol) in einem 21 Druckautoklaven der Firma Mettler versetzt und 1 h bei 95°C und 20 mbar entwässert. Anschließend wird zweimal mit Stickstoff inertisiert und auf 120°C erwärmt. Innerhalb von 8h wird bis zu einem maximalen Druck von 6 bar Ethylenoxid (881 g, 20 mol) bei 120°C zudosiert sowie 10 h nachgerührt. Dann wird Propylenoxid (58 g, 1 mol) in 1.5 h bei 130°C zudosiert und nach beendeter Zugabe noch 3 h nachgerührt. Man erhält Oktanol - 20 EO - 1 PO (1060 g; OH-Zahl 52 mg KOH/g, Theorie 53 mg KOH/g als weißen Feststoff.

b) Veresterung:

Oktanol - 20 EO - 1 PO (150 g, 0.14 mol) wird mit Oktansäure (20 g, 0.14 mol), para-Toluolsulfonsäure (2.5 g, 0.014 mol) und Toluol (200 ml) versetzt und bei 130°C am Wasserabscheider für 20 h gekocht. Man erhält nach Neutralisation mit NaOH und Entfernung des Lösungsmittels 160g der gewünschten wachsartigen Verbindung mit einem Veresterungsgrad von > 80% ($^1$H-NMR).

**Vergleichsbeispiel 5**

**Gemisch mit der Hauptkomponente**

**2-Propylheptyloxypropylencosaoxyethylenglykol-Dekansäureester**

a) Herstellung des Alkylalkoxylats:

2-Propylheptanol (395.8 g, 2.5 mol; Hersteller BASF) wird mit gepulvertem KOH (11g, 0.20 mol) in einem 3,51 Druckautoklaven der Firma Mettler versetzt und 1 h bei 95°C und 20 mbar entwässert. Anschließend wird zweimal mit Stickstoff inertisiert und auf 120°C erwärmt. Man dosiert innerhalb von 1 h bis zu einem maximalen Druck von 2 bar Propylenoxid (145 g, 2 mol) zu und lässt 2 h bei Druckkonstanz nachrühren. Anschließend wird bei 120°C innerhalb von 8 h bis zu einem maximalen Druck von 6 bar Ethylenoxid (880 g, 50 mol) zudosiert und nach beendeter Zugabe noch 3 h nachgerührt.

Anschließend wird die Verbindung mit Ambosol (3 Gewichtsprozent) versetzt und filtriert. Man erhält 2-Propylheptyloxypropylencosaoxyethylenglykol (2744 g; OH-Zahl 52 mg KOH/g, Theorie 51 mg KOH/g) als weißen Feststoff.

b) Veresterung:

2-Propylheptyloxypropylencosaoxyethylenglykol (165 g, 0.15 mol) wird mit Dekansäure (25.8 g, 0.15 mol),

para-Toluolsulfonsäure (1.4g, 0.075 mol) und Toluol (50 ml) versetzt und bei 140°C am Wasserabscheider für 10 h gekocht. Man erhält 189 g wachsartigen Feststoff mit einem Veresterungsgrad von 82% ($^1$H-NMR).

**Vergleichsbeispiel 6**

**Gemisch mit der Hauptkomponente**

**2-Propylheptylcosaoxyethylenoxypropylenglykol-Dekansäureester**

a) Herstellung des Alkylalkoxylats:

2-Propylheptanol (158.3 g, 1.0 mol; Hersteller BASF) wird mit gepulvertem KOH (4.4 g, 0.078 mol) in einem 21 Druckautoklaven der Firma Mettler versetzt und 1 h bei 95°C und 20 mbar entwässert. Anschließend wird zweimal mit Stickstoff inertisiert und auf 120°C erwärmt. Innerhalb von 8 h wird bis zu einem maximalen Druck von 8 bar Ethylenoxid (880 g, 20 mol) zudosiert und nach beendeter Zugabe noch 6 h nachgerührt. Anschließend wird der Reaktor auf Normaldruck entspannt und innerhalb von 2 h bis zu einem Druck von 7 bar Propylenoxid (58 g, 1 mol) bei 120°C zudosiert. Abschließend wird die Verbindung mit Ambosol (3 Gewichtsprozent) versetzt und filtriert. Man erhält 2-Propylheptylcosaoxyethylenglykol (1030 g; OH-Zahl 54 mg KOH/g, Theorie 51 mg KOH/g) als weißen Feststoff.

b) Veresterung:

2-Propylheptylcosaoxyethylenoxypropylenglykol (124.7 g, 0.12 mol) wird mit Dekansäure (20.6 g, 0.12 mol), para-Toluolsulfonsäure (1.1 g, 0.06 mol) und Toluol (50 ml) versetzt und bei 140°C am Wasserabscheider für 10 h gekocht. Man erhält 142 g wachsartigen Feststoff mit einem Veresterungsgrad von 90% ($^1$H-NMR).

**Anwendungsbeispiel 7**

**Schaumvolumen in der Geschirrspülmaschine**

Das Schaumvolumen in einer Geschirrspülmaschine wird geprüft. Dabei wird 10 ml Hühnerei, 19 g eines Basisgeschirrspülmittels (48% Natriummetasilikat x $5H_2O$, 45% Natriumtriphosphat, 5% Natriumcarbonat) und 1 g des Tensids in die Spülmaschine gegeben. Bei unterschiedlichen Temperaturen wird dann die Zahl der Umdrehungen des Sprüharms gemessen. Bei hohem Schaumniveau wird der Sprüharm abgebremst, bei niedrigem kann er mit höchst möglicher Geschwindigkeit (ca. 150 U/min) arbeiten.

Verschiedene Tenside wurden in dieser Anwendung geprüft.

| Name | Tensid |
|---|---|
| A | C16C18-Fettalkohol - 50 EO + Dekansäure (Veresterungsgrad 95%) |
| B* | C16C18-Fettalkohol - 50 EO + Dekansäure (Veresterungsgrad 83%) |
| C* | Oktanol - 4.5 EO + Oktansäure |
| D* | Oktanol - 20 EO - 1 PO + Oktansäure |
| E* | 2-PH-1 PO-20E0 + Dekansäure |
| F* | 2-PH-20EO-1PO + Dekansäure |
| * Vergleichsbeispiele | |

Die Umdrehungsgeschwindigkeit wurde bei 30, 40, 50, 60°C gemessen. In folgender Tabelle sind die Rotorgeschwindigkeiten in U/min bei verschiedenen Temperaturen aufgelistet.

| **Temperatur** | **A** | **B*** | **C*** | **D*** | **E*** | **F*** |
|---|---|---|---|---|---|---|
| 30°C | 121 | 51 | 85 | 72 | 113 | 123 |
| 40°C | 120 | 46 | 91 | 89 | 120 | 127 |
| 50°C | 122 | 42 | 93 | 120 | 128 | 129 |

(fortgesetzt)

| Temperatur | A | B* | C* | D* | E* | F* |
|---|---|---|---|---|---|---|
| 60°C | 121 | 44 | 95 | 124 | 128 | 129 |
| * Vergleichsbeispiele | | | | | | |

**Patentansprüche**

**1.** Wasch- oder Reinigungsmittel-Formulierung, welche bei Raumtemperatur in fester Form vorliegt, enthaltend eine schaumarme Tensid-Mischung enthaltend Ester der allgemeinen Formel (I)

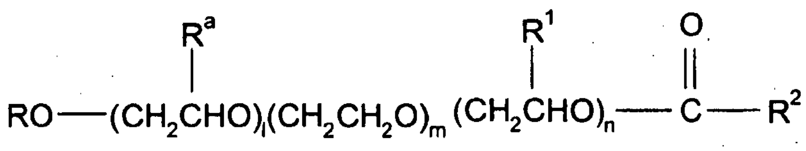

(I)

und deren Alkohole der allgemeinen Formel (Ia)

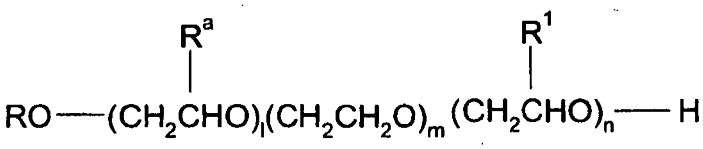

(Ia)

wobei

R ein verzweigter oder unverzweigter Alkylrest mit 8 bis 22 Kohlenstoffatomen ist;
$R^a$, $R^1$ unabhängig voneinander Wasserstoff oder ein verzweigter oder unverzweigter Alkylrest mit 1 bis 5 Kohlenstoffatomen sind;
$R^2$ ein verzweigter oder unverzweigter Alkylrest mit 5 bis 17 Kohlenstoffatomen ist;
l, n unabhängig voneinander eine Zahl von 1 bis 5 sind und
m eine Zahl von 38 bis 70 ist und

wobei das Verhältnis der molaren Mengen der Ester (I) zu den Alkoholen (Ia) mindestens 17:3 beträgt und l+n+m eine Zahl von 46 bis 75 ist; sowie Builder.

**2.** Formulierung nach Anspruch 1, **dadurch gekennzeichnet, dass** die Tensid-Mischung Ester der allgemeinen Formel (II)

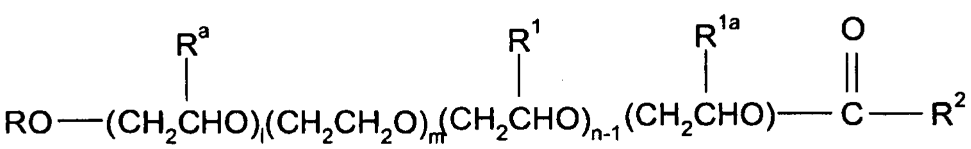

(II)

und deren Alkohole der allgemeinen Formel (IIa)

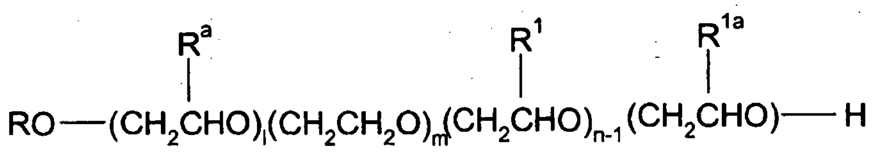

(IIa)

enthält, wobei $R^{1a}$ ein verzweigter oder unverzweigter Alkylrest mit 1 bis 5 Kohlenstoffatomen ist und R, $R^a$, $R^1$, $R^2$, l, m und n die Bedeutung wie in Anspruch 1 haben.

3. Formulierung nach Anspruch 1 oder 2, **dadurch gekennzeichnet, dass** mindestens eine der folgenden Angaben erfüllt ist:

   a) R ist ein verzweigter oder unverzweigter Alkylrest mit 12 bis 22 Kohlenstoffatomen;
   b) $R^a$, $R^1$ sind unabhängig voneinander Wasserstoff, Methyl oder Ethyl;
   c) $R^{1a}$ ist Methyl oder Ethyl;
   d) $R^2$ ist ein verzweigter oder unverzweigter Alkylrest mit 5 bis 13 Kohlenstoffatomen;
   e) n=1 und l=5;
   f) m ist eine Zahl von 39 bis 54.

4. Formulierung nach einem der Ansprüche 1 bis 3, **dadurch gekennzeichnet, dass** das mittlere Molekulargewicht der Tensid-Mischung von 1800 g/mol bis 4000 g/mol beträgt.

5. Formulierung nach einem der Ansprüche 1 bis 4, **dadurch gekennzeichnet, dass** der Beginn des Schmelzbereiches der Mischung über 35 °C liegt.

6. Verwendung einer Tensid-Mischung, wie in einem der Ansprüche 1 bis 5 angegeben, in bei Raumtemperatur festen Wasch- und Reinigungsmittelformulierungen.

**Claims**

1. A washing or cleaning composition formulation which is in solid form at room temperature, comprising a low-foam surfactant mixture comprising esters of the general formula (I)

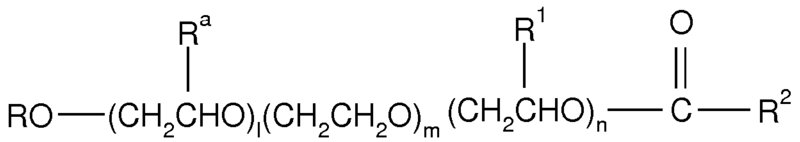

(I)

and alcohols thereof of the general formula (Ia)

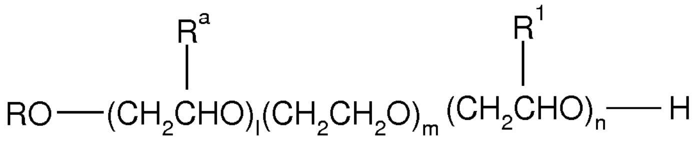

(Ia)

where

R is a branched or unbranched alkyl radical having from 8 to 22 carbon atoms;
$R^a$, $R^1$ are each independently hydrogen or a branched or unbranched alkyl radical having from 1 to 5 carbon atoms;
$R^2$ is a branched or unbranched alkyl radical having from 5 to 17 carbon atoms;
l, n are each independently from 1 to 5 and
m is from 38 to 70, and

where the ratio of the molar amounts of the esters (I) to the alcohols (Ia) is at least 17:3 and l+n+m is from 46 to 75; and also builders.

2. The formulation according to claim 1, wherein the surfactant mixture comprises esters of the general formula (II)

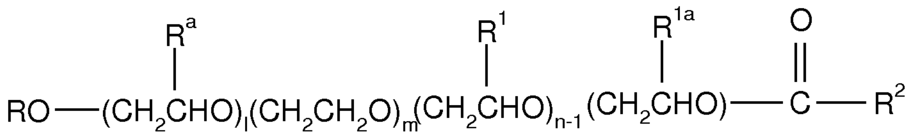

(II)

and alcohols thereof of the general formula (IIa)

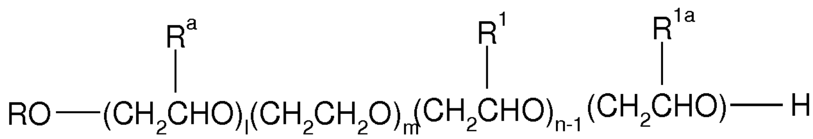

(IIa)

where $R^{1a}$ is a branched or unbranched alkyl radical having from 1 to 5 carbon atoms and R, $R^a$, $R^1$, $R^2$, 1, m and n are each as defined in claim 1.

3. The formulation according to claim 1 or 2, wherein at least one of the following statements is satisfied:

a) R is a branched or unbranched alkyl radical having from 12 to 22 carbon atoms;
b) $R^a$, $R^1$ are each independently hydrogen, methyl or ethyl;
c) $R^{1a}$ is methyl or ethyl;
d) $R^2$ is a branched or unbranched alkyl radical having from 5 to 13 carbon atoms;
e) n = 1 and 1 = 5;
f) m is from 39 to 54.

4. The formulation according to any one of claims 1 to 3, wherein the mean molecular weight of the surfactant mixture is from 1800 g/mol to 4000 g/mol.

5. The formulation according to any one of claims 1 to 4, wherein the beginning of the melting range of the mixture is above 35°C.

6. The use of a surfactant mixture as specified in any one of claims 1 to 5 in washing and cleaning composition formulations that are solid at room temperature.

## Revendications

1. Formulation d'agent de lavage ou de nettoyage, qui se trouve sous forme solide à température ambiante, contenant un mélange tensioactif pauvre en mousse contenant des esters de formule générale (I)

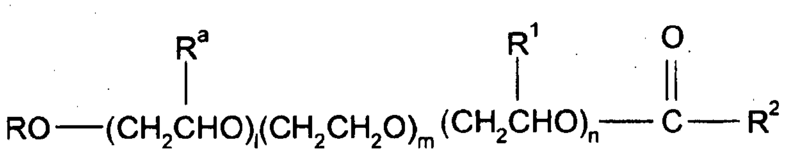

(I)

et leurs alcools de formule générale (Ia)

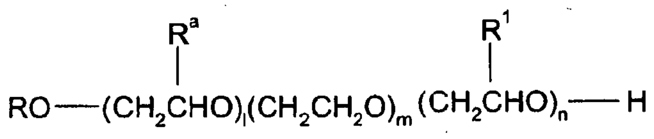

(Ia)

où

R représente un radical alkyle ramifié ou non ramifié comprenant 8 à 22 atomes de carbone ;
$R^a$, $R^1$ représentent, indépendamment l'un de l'autre, hydrogène ou un radical alkyle ramifié ou non ramifié comprenant 1 à 5 atomes de carbone ;
$R^2$ représente un radical alkyle ramifié ou non ramifié comprenant 5 à 17 atomes de carbone ;
l, n représentent, indépendamment l'un de l'autre, un entier de 1 à 5 et
m représente un nombre de 38 à 70, et

le rapport des quantités molaires des esters (I) aux alcools (Ia) valant au moins 17:3 et 1 + n + m valant un nombre de 46 à 75 ; ainsi que des adjuvants.

**2.** Formulation selon la revendication 1, **caractérisée en ce que** le mélange tensioactif contient des esters de formule générale (II)

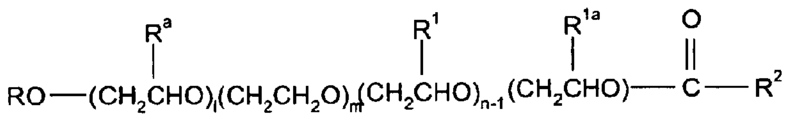

(II)

et leurs alcools de formule générale (IIa)

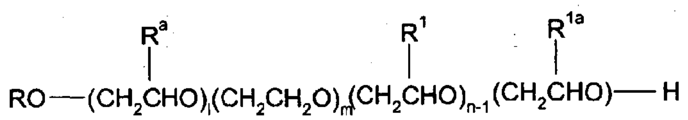

(IIa)

$R^{13}$ représentant un radical alkyle ramifié ou non ramifié comprenant 1 à 5 atomes de carbone et R, $R^a$, $R^1$, $R^2$, 1, m et n présentant la signification comme dans la revendication 1.

**3.** Formulation selon la revendication 1 ou 2, **caractérisée en ce qu'**au moins une des conditions suivantes est remplie :

a) R représente un radical alkyle ramifié ou non ramifié comprenant 12 à 22 atomes de carbone ;
b) $R^a$, $R^1$ représentent, indépendamment l'un de l'autre, hydrogène, méthyle ou éthyle ;
c) $R^{13}$ représente méthyle ou éthyle ;
d) $R^2$ représente un radical alkyle ramifié ou non ramifié comprenant 5 à 13 atomes de carbone ;
e) n = 1 et 1 = 5 ;
f) m vaut un nombre entier de 39 à 54.

**4.** Formulation selon l'une quelconque des revendications 1 à 3, **caractérisée en ce que** le poids moléculaire moyen du mélange tensioactif est de 1800 g/mole à 4000 g/mole.

**5.** Formulation selon l'une quelconque des revendications 1 à 4, **caractérisée en ce que** le début de la plage de fusion du mélange est supérieur à 35°C.

**6.** Utilisation d'un mélange tensioactif selon l'une quelconque des revendications 1 à 5, dans des formulations d'agent de lavage et de nettoyage solides à température ambiante.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1243312 A
- DE 2544707 A
- EP 035702 A
- WO 9403251 A
- WO 2006097435 A
- WO 9511225 A
- US 4604224 A
- EP 451508 A
- EP 396303 A
- US 3887806 A
- DE 4313909 A
- US 5227446 A
- DE 4415623 A
- US 5756456 A
- EP 001004 B
- US 5399286 A
- DE 4106355 A
- EP 656914 A
- EP 454126 A
- EP 511037 B
- WO 9401486 A
- EP 581452 A
- WO 9719159 A
- US 5360569 A
- EP 453003 A
- WO 9421777 A


### In der Beschreibung aufgeführte Nicht-Patentliteratur


- Reinigungs- und Pflegemittel im Haushalt. Verlag für chemische Industrie, 2003, 161-184